# EUROPÄISCHE PATENTSCHRIFT

(11) **EP 1 249 383 B1**
(45) Veröffentlichungstag und Bekanntmachung des Hinweises auf die Patenterteilung: **11.05.2005**
(21) Anmeldenummer: 02005473.0
(22) Anmeldetag: 09.03.2002
(51) Int. Cl.: B62D 33/06

(54) **Modular aufgebaute Fahrerhaus-Baureihe für Lastkraftwagen**
Modular construction for range of drivers' cabs for load carrying vehicles
Construction modulaire pour gamme de cabines de conducteur pour véhicules à marchandises

(30) Priorität: 12.04.2001 DE 10118344
(43) Veröffentlichungstag der Anmeldung: 16.10.2002
(73) Patentinhaber: DaimlerChrysler AG, 70567 Stuttgart (DE)
(72) Erfinder: Fischer, Herbert, 71263 Weil der Stadt (DE); Schuller, Karl-Heinz, 71134 Aidlingen (DE)

(56) Entgegenhaltungen:
- DE-A- 3 617 961
- US-A- 4 050 735
- US-A- 5 560 673
- US-B1- 6 178 612

## Beschreibung

Die Erfindung betrifft eine modular aufgebaute Fahrerhaus-Baureihe für Lastkraftwagen mit den Merkmalen des Oberbegriffs des Anspruchs 1.

Eine derartige Fahrerhaus-Baureihe ist beispielsweise aus der US 5,560,673 bekannt und umfasst ein bei allen Fahrzeug-Varianten einheitlich aufgebautes Grundmodul sowie ein daran anbaubares Anbaumodul. Das Grundmodul besitzt eine Vorderwand, zwei Seitenwände mit Tür und Türrahmen, einen Boden und ein Dach. Desweiteren ist das Grundmodul nach hinten offen ausgebildet und besitzt hinten einen ringförmig geschlossenen ersten Anflanschbereich. Im Unterschied dazu umfasst das Anbaumodul eine Rückwand, zwei Seitenwandabschnitte, einen Bodenabschnitt und einen Dachabschnitt. Das Anbaumodul ist nach vorn offen ausgebildet und vorn mit einem ringförmig geschlossenen, zum ersten Anflanschbereich komplementären zweiten Anflanschbereich ausgestattet. Hierdurch ergibt sich die Möglichkeit, im Rahmen einer Vormontage Grundmodul und Anbaumodul separat herzustellen und im Rahmen einer Endmontage besonders einfach zum Fahrerhaus zusammen zu bauen.

Aus der DE 43 02 489 C2 ist eine andere Fahrerhaus-Baureihe bekannt, mit deren Hilfe Fahrerhaus-Varianten unterschiedlicher Längenabmessungen ausgebildet werden können. Zur Darstellung unterschiedlicher Fahrerhauslängen besitzen die bekannten Fahrerhäuser Seitenwände, die je nach Fahrerhauslänge ein unterschiedliches Maß aufweisen können. Ebenso werden ein Dach sowie ein Boden des Fahrerhauses entsprechend der gewünschten Fahrerhauslänge unterschiedlich dimensioniert.

Ebenso zeigt die DE 36 17 961 Al, dass zum Aufbau unterschiedlicher Fahrerhaus-Varianten weitgehend gleiche Bauteile verwendet werden können. Zur Darstellung unterschiedlicher Fahrerhauslängen werden dabei unterschiedlich dimensionierte Dächer und Seitenwände montiert.

Die gleiche Vorgehensweise ergibt sich auch aus der EP 0 716 005 B1 sowie aus der EP 0 361 511 B1, bei denen jeweils zur Ausbildung unterschiedlicher Fahrerhauslängen die Seitenwände, das Dach und der Boden unterschiedlich dimensioniert werden.

Die vorliegende Erfindung beschäftigt sich mit dem Problem, für eine Fahrerhaus-Baureihe der eingangs genannten Art eine Ausführungsform anzugeben, die eine vereinfachte und preiswerte Herstellung unterschiedlicher Fahrerhaus-Varianten ermöglicht.

Dieses Problem wird erfindungsgemäß durch eine Fahrerhaus-Baureihe mit den Merkmalen des Anspruchs 1 gelöst.

Die Erfindung beruht auf dem allgemeinen Gedanken, für sämtliche Fahrerhaus-Varianten ein einheitliches Grundmodul mit Vorderwand, Dach, Boden und zwei Seitenwänden einschließlich Türen und Türrahmen bereitzustellen, das mit unterschiedlich langen Anbaumodulen zu einem Führerhaus komplettierbar ist. Das Anbaumodul weist erfindungsgemäß eine Rückwand des Fahrerhauses sowie zwei Seitenwandabschnitte, einen Bodenabschnitt und einen Dachabschnitt auf. Im angebauten Zustand verlängern die Seitenwandabschnitte, der Bodenabschnitt und der Dachabschnitt das Grundmodul im Bereich seiner Seitenwände, seines Daches und seines Bodens. Die Ausbildung der Führerhaus-Varianten erfolgt dementsprechend durch die Ausbildung von Anbaumodul-Varianten bei einem für alle Varianten gleichbleibenden Grundmodul. Die Module können parallel zueinander vormontiert werden und in der Endmontage zum Fahrerhaus komplettiert werden. Diese Vorgehensweise vereinfacht die serienmäßige Herstellung der Fahrerhäuser.

Ein besonderer Vorteil wird dabei darin gesehen, dass die Anbaumodule jeweils eine Rückwand des Fahrerhauses aufweisen, so dass das Grundmodul nach hinten offen ausgebildet werden kann. Dies erleichtert den Innenausbau des Grundmoduls, da die Zugänglichkeit durch diese große Öffnung erheblich verbessert ist. Entsprechendes gilt für das nach vorn offene Anbaumodul.

Um das jeweilige Anbaumodul besonders einfach am Grundmodul anbauen zu können, ist das Grundmodul hinten mit einem ringförmig geschlossenen ersten Anflanschbereich ausgestattet, während jedes Anbaumodul vorn einen dazu komplementären zweiten Anflanschbereich aufweist.

Erfindungsgemäß ist außerdem das Anbaumodul selbst modular aufgebaut und weist ein für alle Fahrerhaus-Varianten einheitlich aufgebautes Rückwandmodul und wenigstens ein daran angebautes Zwischenmodul auf, wobei dieses Zwischenmodul für jede Fahrerhaus-Variante die Seitenwandabschnitte, den Bodenabschnitt und den Dachabschnitt mit unterschiedlichen Längenabmessungen aufweist, nach vorn offen ausgebildet ist, vorn den zweiten Anflanschbereich besitzt, nach hinten offen ausgebildet ist und hinten einen ringförmig geschlossenen dritten Anflanschbereich besitzt, wobei das Rückwandmodul die Rückwand aufweist und vorn einen ringförmig geschlossenen, zum dritten Anflanschbereich komplementären vierten Anflanschbereich besitzt. Diese Merkmalskombination beruht auf dem allgemeinen Gedanken, die unterschiedlichen Fahrhaus-Varianten nur noch durch Varianten des Zwischenmoduls zu bilden, das in Fahrzeuglängsrichtung zwischen das Grundmodul und das Rückwandmodul eingesetzt wird. Insoweit kann eine zusätzliche Vereinheitlichung bei der Fertigung erreicht werden.

Von besonderem Vorteil ist dabei eine Variante, bei welcher der vierte Anflanschbereich kompatibel zum ersten Anflanschbereich ausgebildet ist. Diese Bauweise ermöglicht es, das Rückwandmodul auch direkt am Grundmodul anzubauen, sofern eine besonders kurze Bauweise für das Fahrerhaus erwünscht ist, die ohne Zwischenmodul auskommt. Diese Bauweise hat außerdem zur Folge, dass auch zwei oder mehr Zwischenmodule aneinander angebaut werden können, um bestimmte Längsabmessungen für das Fahrerhaus zu erzielen.

Bei einer zweckmäßigen Ausführungsform weist das Fahrerhaus Fahrerhauslager auf, mit denen das Fahrerhaus an einem Tragrahmen des Lastkraftwagens lagerbar ist oder gelagert ist, wobei diese Fahrerhauslager für alle Fahrerhaus-Varianten einheitlich am Grundmodul ausgebildet sind. Diese Fahrerhauslager bilden quasi eine Art mechanische Schnittstelle zur Anbindung des Fahrerhauses an den Tragrahmen des Lastkraftwagens. Durch die Anbringung dieser Fahrerhauslager am Grundmodul ergibt sich eine einheitliche Schnittstelle, wodurch die Ausgestaltung des Tragrahmens und die Montage des Fahrerhauses unabhängig von seiner Längen-Variante stets gleich bleibt.

Vorzugsweise umfassen die Seitenwände des Grundmoduls jeweils eine B-Säule des Fahrerhauses, wodurch das Grundmodul im wesentlichen selbsttragend ausgebildet ist.

Von besonderem Vorteil ist eine Weiterbildung, bei der das Grundmodul hinten einen geschlossenen Trägerring aufweist, umfassend zwei B-Säulen, die über einen Dachquerträger und einen Bodenquerträger miteinander verbunden sind, wobei der erste Anflanschbereich im Bereich dieses Trägerrings ausgebildet ist. Diese Bauweise führt zu einer besonders steifen und stabilen Konstruktion des Grundmoduls beispielsweise zur Erreichung einer geforderten Crashsicherheit. Da das Grundmodul bereits in sich stabil ausgebildet ist, müssen die Flanschverbindungen zwischen Grundmodul und Anbaumodul keinen besonders hohen Steifigkeitsund Stabilitätsanforderungen genügen, so daß die Anflanschbereiche einen relativ einfachen Aufbau besitzen können und dementsprechend preiswert herstellbar und leicht montierbar sind.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: eine Seitenansicht auf ein erfindungsgemäßes Fahrerhaus und
- Fig. 2: eine perspektivische Ansicht auf ein Fahrerhaus nach der Erfindung, jedoch bei einer besonderen Ausführungsform.

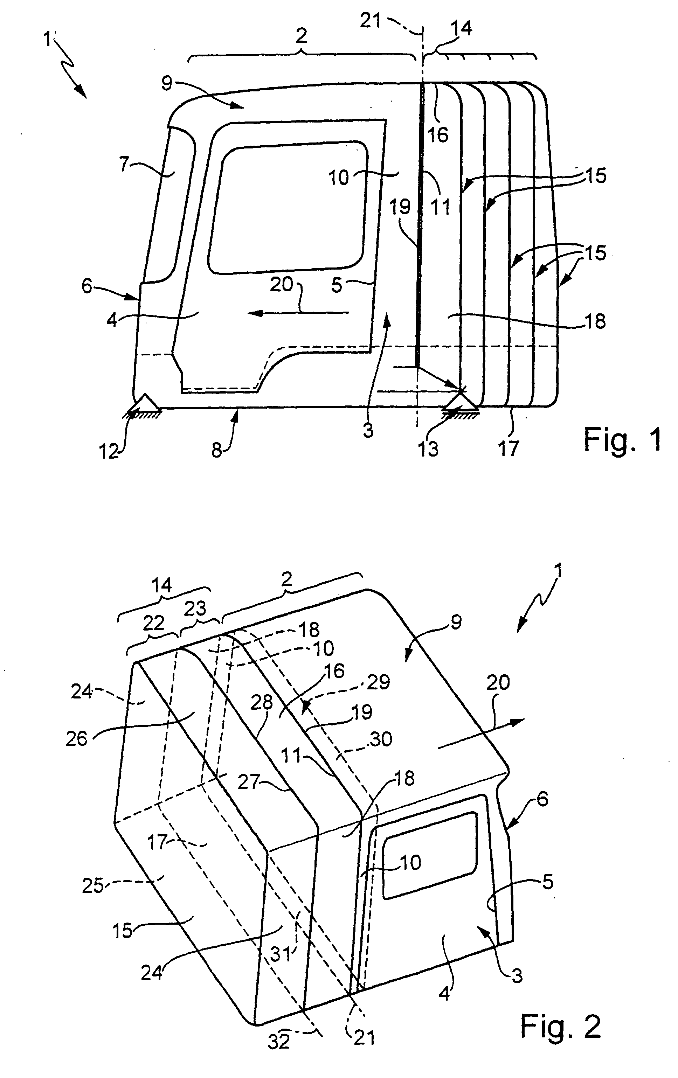

Entsprechend den Fig. 1 und 2 weist ein erfindungsgemäßes Fahrerhaus 1 ein durch eine geschweifte Klammer gekennzeichnetes Grundmodul 2 auf, das auf jeder Fahrzeugseite eine Seitenwand 3 mit jeweils einer Tür 4 und einem Türrahmen 5 sowie eine Vorderwand 6 mit Windschutzscheibe 7, einen Boden 8 und ein Dach 9 aufweist. Das Grundmodul 2 erstreckt sich dabei von der Vorderwand 6 so weit nach hinten, daß seine Seitenwände 3 sogenannte B-Säulen 10 umfassen. Das Grundmodul 2 ist nach hinten offen ausgebildet und besitzt dort einen ringförmig geschlossenen ersten Anflanschbereich 11.

Am Grundmodul 2 sind zumindest ein vorderes Fahrerhauslager 12 sowie wenigstens ein hinteres Fahrerhauslager 13 ausgebildet, über die das Fahrerhaus 1 an einem nicht gezeigten Tragrahmen eines Lastkraftwagens lagerbar ist.

Erfindungsgemäß weist das Fahrerhaus 1 außerdem für jede Fahrerhaus-Variante ein entsprechendes Anbaumodul 14 auf, von denen in Fig. 1 fünf verschiedene Varianten dargestellt und durch geschweifte Klammern gekennzeichnet sind, die sich hinsichtlich ihrer Längenabmessungen voneinander unterscheiden. Jedes Anbaumodul 14 weist eine Rückwand 15, einen mehr oder weniger langen Dachabschnitt 16, einen mehr oder weniger langen Bodenabschnitt 17 sowie zwei mehr oder weniger lange Seitenwandabschnitte 18 auf. Das Anbaumodul 14 ist nach vorn offen ausgebildet und besitzt vorn einen ringförmig geschlossenen zweiten Anflanschbereich 19, der komplementär zum ersten Anflanschbereich 11 des Grundmoduls 2 ausgebildet ist. Bei der hier gezeigten, bevorzugten Ausführungsform liegen der erste und der zweite Anflanschbereich 11 bzw. 19 im wesentlichen in einer senkrecht zu einer durch einen Pfeil symbolisierten Fahrzeuglängsrichtung 20 verlaufenden ersten Trennebene 21. Durch diese Bauweise können Herstellungstoleranzen besonders einfach ausgeglichen werden.

Das Anbaumodul 14 kann über die Flanschverbindung zwischen den Anflanschbereichen 11 und 19 am Grundmodul 2 befestigt werden, beispielsweise durch Klebeverbindungen und/oder Schraubverbindungen. Im angebauten Zustand verlängern die Seitenwandabschnitte 18 die Seitenwände 3, während der Bodenabschnitt 17 den Boden 8 und der Dachabschnitt 16 das Dach 9 in Fahrzeuglängsrichtung nach hinten verlängern. Je nach Anbaumodul-Variante können dabei unterschiedliche Längsabmessungen für das Fahrerhaus 1 realisiert werden. Von besonderer Bedeutung ist dabei, daß für sämtliche Fahrerhaus-Varianten stets dieselben Fahrerhauslager 12,13 bzw. die identischen Positionen für die Fahrerhauslager 12,13 eingehalten werden können.

Bei der besonderen Ausführungsform gemäß Fig. 2 ist das dort gezeigte Anbaumodul 14 selbst modular aufgebaut und weist ein Rückwandmodul 22 sowie ein Zwischenmodul 23 auf. Das Rückwandmodul 22 ist für alle Fahrerhaus-Varianten einheitlich aufgebaut und weist die Rückwand 15 auf. Des weiteren kann das Rückwandmodul 22 gemäß dieser bevorzugten Ausführungsform zwei Seitenwandansätze 24, einen Bodenansatz 25 und einen Dachansatz 26 besitzen.

Das Zwischenmodul 23 besteht im wesentlichen aus dem Dachabschnitt 16, dem Bodenabschnitt 17 und aus den beiden Seitenwandabschnitten 18 des Anbaumoduls 14. Das Zwischenmodul 23 ist sowohl nach vorn als auch nach hinten offen ausgebildet und weist vorn den zweiten Anflanschbereich 19 auf, während es hinten einen dritten Anflanschbereich 27 besitzt.

Das Rückwandmodul 22 weist vorn einen vierten Anflanschbereich 28 auf, der komplementär zum dritten Anflanschbereich 27 des Zwischenmoduls 23 ausgebildet ist. Wie aus Fig. 2 hervorgeht, liegen der dritte und vierte Anflanschbereich 27 bzw. 28 im wesentlichen in einer senkrecht zur Fahrzeuglängsrichtung 20 verlaufenden zweiten Trennebene 32. Bei einer bevorzugten Ausführungsform kann der vierte Anflanschbereich 28 kompatibel zum ersten Anflanschbereich 11 ausgebildet sein, so daß das Rückwandmodul 22 auch ohne Zwischenschaltung des Zwischenmoduls 23 direkt am Grundmodul 2 angebaut werden kann, um beispielsweise eine besonders kurze Bauform für das Fahrerhaus 1 zu erzielen. Zur Erzielung unterschiedlicher Fahrerhaus-Varianten mit verschiedener Längsabmessung kann nun zwischen dem Rückwandmodul 23 und dem Grundmodul 2 ein Zwischenmodul 23 montiert werden, wobei für das Zwischenmodul 23 unterschiedliche lange Varianten bereitgestellt werden. Ebenso ist es möglich, zwei oder mehr Zwischenmodule 23 zu montieren.

Entsprechend Fig. 2 kann das Grundmodul 2 bei der hier gezeigten besonderen Ausführungsform hinten einen geschlossenen Trägerring 29 aufweisen, der die beiden B-Säulen 10, sowie einen Dachquerträger 30 und einen Bodenquerträger 31 umfaßt. Die B-Säulen 10, Dachquerträger 30 und Bodenquerträger 31 sind aneinander befestigt und bilden einen in sich steifen, geschlossenen Rahmen, durch den das Grundmodul 2 eine hohe Steifigkeit erhält.

## Patentansprüche

1. Modular aufgebaute Fahrerhaus-Baureihe für Lastkraftwagen umfassend
- ein bei allen Fahrzeug-Varianten einheitlich aufgebautes Grundmodul (2) und ein daran anbaubares Anbaumodul (14),
- wobei das Grundmodul (2) eine Vorderwand (6), zwei Seitenwände (3) mit Tür (4) und Türrahmen (5), einen Boden (8) und ein Dach (9) aufweist, nach hinten offen ausgebildet ist und hinten einen ringförmig geschlossenen ersten Anflanschbereich (11) besitzt,
- wobei das Anbaumodul (14) eine Rückwand (15), zwei Seitenwandabschnitte (18), einen Bodenabschnitt (17) und einen Dachabschnitt (16) aufweist, nach vorn offen ausgebildet ist und vorn einen ringförmig geschlossenen, zum ersten Anflanschbereich (11) komplementären zweiten Anflanschbereich (19) besitzt,
**dadurch gekennzeichnet**,
- dass die Fahrerhaus-Baureihe zur Ausbildung von Fahrerhaus-Varianten unterschiedlicher Längenabmessungen ausgebildet ist,
- dass das Anbaumodul (14) für jede Fahrerhaus-Variante unterschiedliche Längenabmessungen aufweist,
- dass die Seitenwandabschnitte (18), der Bodenabschnitt (17) und der Dachabschnitt (16) für jede Fahrerhaus-Variante unterschiedliche Längenabmessungen aufweisen,
- dass das Anbaumodul (14) modular aufgebaut ist und ein für alle Fahrerhaus-Varianten einheitlich aufgebautes Rückwandmodul (22) und wenigstens ein daran anbaubares Zwischenmodul (23) aufweist,
- dass das Zwischenmodul (23) für jede Fahrerhaus-Variante die Seitenwandabschnitte (18), den Bodenabschnitt (17) und den Dachabschnitt (16) mit unterschiedlichen Längenabmessungen aufweist, nach vorn offen ausgebildet ist, vorn den zweiten Anflanschbereich (19) besitzt, nach hinten offen ausgebildet ist und hinten einen ringförmig geschlossenen dritten Anflanschbereich (27) besitzt,
- dass das Rückwandmodul (22) die Rückwand (15) aufweist und vorn einen ringförmig geschlossenen, zum dritten Anflanschbereich (27) komplementären vierten Anflanschbereich (28) besitzt.

2. Fahrerhaus-Baureihe nach Anspruch 1,
**dadurch gekennzeichnet,**
**dass** dritter und vierter Anflanschbereich (27,28) im wesentlichen in einer senkrecht zur Fahrzeuglängsrichtung (20) liegenden zweiten Trennebene (32) liegen.

3. Fahrerhaus-Baureihe nach Anspruch 1 oder 2,
**dadurch gekennzeichnet,**
**dass** das Rückwandmodul (22) zwei Seitenwandansätze (24), einen Bodenansatz (25) und einen Dachansatz (26) aufweist.

4. Fahrerhaus-Baureihe nach einem der Ansprüche 1 bis 3,
**dadurch gekennzeichnet,**
**dass** der vierte Anflanschbereich (28) kompatibel zum ersten Anflanschbereich (11) ausgebildet ist.

5. Fahrerhaus-Baureihe nach einem der Ansprüche 1 bis 4,
**dadurch gekennzeichnet,**
**dass** erster und zweiter Anflanschbereich (11,19) im wesentlichen in einer senkrecht zur Fahrzeuglängsrichtung (20) verlaufenden ersten Trennebene (21) liegen.

6. Fahrerhaus-Baureihe nach einem der Ansprüche 1 bis 5,
**dadurch gekennzeichnet,**
**dass** das Fahrerhaus (1) Fahrerhauslager (12,13) aufweist, mit denen das Fahrerhaus (1) an einem Tragrahmen des Lastkraftwagens lagerbar oder gelagert ist, wobei diese Fahrerhauslager (12,13) für alle Fahrerhaus-Varianten einheitlich am Grundmodul (2) ausgebildet sind.

7. Fahrerhaus-Baureihe nach einem der Ansprüche 1 bis 6,
**dadurch gekennzeichnet,**
**dass** die Seitenwände (3) des Grundmoduls (2) jeweils eine B-Säule (10) umfassen.

8. Fahrerhaus-Baureihe nach einem der Ansprüche 1 bis 7,
**dadurch gekennzeichnet,**
**dass** das Grundmodul (2) hinten einen geschlossenen Trägerring (29) aufweist, umfassend zwei B-Säulen (10), die über einen Dachquerträger (30) und einen Bodenquerträger (31) miteinander verbunden sind, wobei der erste Anflanschbereich (11) im Bereich dieses Trägerrings (29) ausgebildet ist.

## Claims

1. Modular driver's cabin series for goods vehicles, comprising
- a uniformly constructed basic module (2) on all vehicle variants and an attachment module (14) that can be mounted thereon,
- the basic module (2) having a front wall (6), two sidewalls (3) with doors (4) and doorframes (5), a floor (8) and a roof (9), being constructed open at the rear and having at the back s closed-ring, first flange mounting area (11),
- the attachment module (14) having a rear wall (15), two sidewall sections (18), a floor section (17) and a roof section (16), being constructed open at the front and having at the front a closed-ring, second flange mounting area (19) complementary to the first flange mounting area (11),
**characterised in that**
- the driver's cabin series is designed for the construction of driver's cabin variants with differing longitudinal dimensions,
- the attachment module (14) has different longitudinal dimensions for each driver's cabin variant,
- the sidewall sections (18), floor section (17) and roof section (16) have different longitudinal dimensions for each driver's cabin variant,
- the attachment module (14) is a modular structure having for each driver's cabin variant a uniformly constructed rear-wall module (22) and at least one intermediate (23) that can be mounted thereon,
- for each driver's cabin variant the intermediate module (23) comprises the sidewall sections (18), floor section (17) and roof section (16) with different longitudinal dimensions, being constructed open towards the front and having the second flange mounting area (19) at the front, and being constructed open at the rear and having a closed-ring, third flange mounting area (27) at the rear,
- the rear-wall module (22) comprises the rear wall (15) and has at the front a closed-ring, fourth flange mounting area (28) complementary to the third flange mounting area (27).

2. Driver's cabin series according to Claim 1,
**characterised in that**
the third and fourth flange mounting areas (27, 28) lie essentially in a second separation plane (32) extending perpendicularly to the longitudinal direction (20) of the vehicle.

3. Driver's cabin series according to Claims 1 or 2,
**characterised in that**
the rear-wall module (22) has two sidewall attachments (24), a floor attachment (25) and a roof attachment (26).

4. Driver's cabin series according to any of Claims 1 to 3,
**characterised in that**
the fourth flange mounting area (28) is constructed so as to be compatible with the first flange mounting area (11).

5. Driver's cabin series according to any of Claims 1 to 4,
**characterised in that**
the first and second flange mounting areas (11, 19) lie essentially in a first separation plane (21) extending perpendicularly to the longitudinal direction (20) of the vehicle.

6. Driver's cabin series according to any of Claims 1 to 5,
**characterised in that**
the driver's cabin (1) has driver's cabin mountings (12, 13) by means of which the driver's cabin (1) can be or is mounted on a supporting frams of the goods vehicle, the said driver's cabin mountings (12, 13) being constructed uniformly on the basic module (2) for all the driver's cabin variants.

7. Driver's cabin series according to any of Claims 1 to 6,
**characterised in that**
the sidewalls (3) of the basic module (2) comprise in each case a B-column (10).

8. Driver's cabin series according to any of Claims 1 to 7,
**characterised in that**
at the rear, the basic module (2) has a closed support ring (29) comprising two B-columns (10) connected to one another by a roof cross-member (30) and a floor cross-member (31), and the first flange mounting area (11) is formed in the area of the said support ring (29).

## Revendications

1. Gamme de modèles de cabines de conduite pour camions, cabines de conduite construites de façon modulaire et comprenant :
- un module de base (2) construit de façon uniforme pour toutes les variantes de véhicules et un module rajouté (14) pouvant être rajouté à ce module de base,
- où le module de base (2) comprend un panneau avant (6), deux panneaux latéraux (3) comportant une porte (4) et un encadrement de porte (5), un plancher (8) et un toit (9), lequel module de base est configuré en étant ouvert vers l'arrière et possède, à l'arrière, une première zone de fixation (11), fermée, de forme annulaire,
- où le module rajouté (14) comprend un panneau arrière (15), deux parties de panneaux latéraux (18), une partie de plancher (17) et une partie de toit (16), lequel module rajouté est configuré en étant ouvert vers l'avant et possède, à l'avant, une deuxième zone de fixation (19), fermée, de forme annulaire, complémentaire par rapport à la première zone de fixation (11),
**caractérisée**
- **en ce que** la gamme de modèles de cabines de conduite est prévue pour la conception de variantes de cabines de conduite ayant différentes dimensions de longueur,
- **en ce que** le module rajouté (14) présente, pour chaque variante de cabine de conduite, différentes dimensions de longueur,
- **en ce que** les parties de panneaux latéraux (18), la partie de plancher (17) et la partie de toit (16) présentent, pour chaque variante de cabine de conduite, différentes dimensions de longueur,
- **en ce que** le module rajouté (14) est construit de façon modulaire et présente un module de panneau arrière (22) construit de façon uniforme pour toutes les variantes de cabines de conduite et présente au moins un module intermédiaire (23) pouvant être rajouté au module de panneau arrière,
- **en ce que** le module intermédiaire (23), pour chaque variante de cabine de conduite, présente les parties de panneaux latéraux (18), la partie de plancher (17) et la partie de toit (16) ayant différentes dimensions de longueur, lequel module intermédiaire est configuré en étant ouvert vers l'avant, possède, à l'avant, la deuxième zone de fixation (19), est configuré en étant ouvert vers l'arrière et possède, à l'arrière, une troisième zone de fixation (27), fermée, de forme annulaire,
- **en ce que** le module de panneau arrière (22) présente le panneau arrière (15) et possède, à l'avant, une quatrième zone de fixation (28), fermée, de forme annulaire, complémentaire par rapport à la troisième zone de fixation (27).

2. Gamme de modèles de cabines de conduite selon la revendication 1, **caractérisée en ce que** les troisième et quatrième zones de fixation (27, 28) se trouvent pratiquement dans un second plan de séparation (32) s'étendant perpendiculairement au sens longitudinal (20) du véhicule.

3. Gamme de modèles de cabines de conduite selon la revendication 1 ou 2, **caractérisée en ce que** le module de panneau arrière (22) présente deux pièces ajoutées (24) de panneau latéral, une pièce ajoutée (25) de plancher et une pièce ajoutée (26) de toit.

4. Gamme de modèles de cabines de conduite selon l'une quelconque des revendications 1 à 3, **caractérisée en ce que** la quatrième zone de fixation (28) est conçue en étant compatible par rapport à la première zone de fixation (11).

5. Gamme de modèles de cabines de conduite selon l'une quelconque des revendications 1 à 4, **caractérisée en ce que** les première et deuxième zones de fixation (11, 19) se trouvent pratiquement dans un premier plan de séparation (21) s'étendant perpendiculairement au sens longitudinal (20) du véhicule.

6. Gamme de modèles de cabines de conduite selon l'une quelconque des revendications 1 à 5, **caractérisée en ce que** la cabine de conduite (1) présente des supports (12, 13) pour la cabine de conduite, au moyen desquels la cabine de conduite (1) peut être positionnée ou est positionnée sur un cadre porteur du camion, où ces supports (12, 13) pour la cabine de conduite sont, de façon uniforme, conçus sur le module de base (2), pour toutes les variantes de cabines de conduite.

7. Gamme de modèles de cabines de conduite selon l'une quelconque des revendications 1 à 6, **caractérisée en ce que** les panneaux latéraux (3) du module de base (2) comprennent à chaque fois un montant B (10).

8. Gamme de modèles de cabines de conduite selon l'une quelconque des revendications 1 à 7, **caractérisée en ce que** le module de base (2) présente, à l'arrière, un anneau support fermé (29), comprenant deux montants B (10) qui sont reliés entre eux par une traverse de toit (30) et par une traverse de plancher (31), où la première zone de fixation (11) se trouve dans la zone de cet anneau support (29).
